# EUROPEAN PATENT SPECIFICATION

(11) **EP 4 146 368 B1**
(45) Date of publication and mention of the grant of the patent: **13.11.2024**
(21) Application number: 21714240.5
(22) Date of filing: 31.03.2021
(51) Int. Cl.: B01D 35/147, B01D 35/157, B01D 35/30

(54) **LIQUID TREATMENT CARTRIDGE**
FLÜSSIGKEITSBEHANDLUNGSKARTUSCHE
CARTOUCHE DE TRAITEMENT DE LIQUIDE

(30) Priority: 08.05.2020 EP 20173741
(43) Date of publication of application: 15.03.2023
(73) Proprietor: BRITA SE, 65232 Taunusstein (DE)
(72) Inventor: ZÖLLER, Jochen, 56355 Nastätten (DE); BERNARD, Dominik, 55118 Mainz (DE)
(86) International application number: PCT/EP2021/058403
(87) International publication number: WO 2021/223942

(56) References cited:
- WO-A1-2016/110321
- WO-A1-2017/037148
- DE-A1- 102008 002 727

## Description

### Technical Field

The invention relates to a system comprising a liquid treatment cartridge and a cap for placement on a cartridge head section of the liquid treatment cartridge.

### Background of the invention

Liquid treatment systems are used to remove unwanted substances from a liquid or to add additional substances to a liquid. In particular, water treatment systems for residential and commercial use allow for the treatment of water in order to enhance the water supply that is intended e.g. for human consumption or for use with water consuming machines within a household, or for industrial purposes e.g. in the food processing industry or in washing and cleaning plants.

Most of the liquid treatment systems make use of a filter cartridge that comprises filter media or a filtering system that removes unwanted substances from a stream of liquid that flows through the filter cartridge. Other cartridges comprise substances that are added to the liquid that flows through the cartridge. For most treatment applications, the liquid treatment cartridges comprise a limited quantity of filter media or additives which is used up over time. Thus, the spent liquid treatment cartridges must be removed from the liquid treatment system and must be replaced by new liquid treatment cartridges to continue the treatment of the liquid.

Usually, the liquid treatment cartridge comprises a cartridge head section that includes at least one liquid inlet port and at least one liquid outlet port for a stream of liquid that flows through the cartridge during the treatment of the liquid. Thus, during a treatment of a stream of liquid, the liquid flows from an outlet port of the head part of the liquid treatment system through the liquid inlet port of the cartridge head section into the cartridge and after a treatment of the liquid within the cartridge from the liquid outlet port of the cartridge head section into the inlet port of the head part of the liquid treatment system and is made available for extraction from the liquid treatment system and for further use of the liquid. In order to provide for a liquid-tight connection of the liquid inlet and outlet ports of the liquid treatment cartridge with the liquid treatment system, the cartridge head section with the liquid inlet port and the liquid outlet port must be inserted into a head part of the liquid treatment system that is configured and adapted to receive and accommodate the cartridge head section in a manner that allows for the liquid-tight connection of the respective ports and that also prevents unintentional removal of the liquid treatment cartridge from the head part.

In order to protect the ports within the cartridge head section from contamination or damage a cap can be placed onto the cartridge head section during or after manufacturing the cartridge. The cap usually covers the cartridge head section and in particular the ports. Such a cap protects important areas or elements of the cartridge head section during storage or transport of the cartridge until the intended use of the cartridge with a liquid treatment system. Thus, in order to allow for access to the ports, such a cap must be removed before the cartridge head section is inserted into the head part of the liquid treatment system.

The cartridge may have a thread so that the cartridge can be screwed into a matching thread in the head part of the liquid treatment system. However, proper alignment of the ports can be difficult when using threads to engage the liquid treatment cartridge with the liquid treatment system. The use of bayonet locks is also known from prior art.

WO 2017/037148 A1 discloses a liquid treatment apparatus for the treatment of aqueous liquids such as mains drinking water. The liquid treatment apparatus includes a replaceable liquid treatment cartridge and a head part. The head part is intended for more or less permanent connection to a supply conduit and a delivery conduit by means of an inlet connector and an outlet connector. For example, the mains water supply can be connected to the inlet connector. The head part includes a housing including left and right housing parts and a bottom plate. A receiving part is journalled for movement between a first and a second position within the housing defined by the left and right housing parts. The liquid treatment cartridge has a housing formed by a cap-shaped housing part and a vessel-shaped housing part. The cap-shaped housing part includes an integral connecting head. The connecting head is provided with four cartridge ports in liquid communication with an interior of the liquid treatment cartridge, each provided at an end of a respective channel through the connecting head. The receiving part includes a body and first to sixth sealing elements. The body defines a cavity for receiving at least part of the connecting head. The receiving part is provided with four liquid-permeable ports in side wall sections. The ports extend through the side wall sections to provide access to the cavity. When the connecting head is inserted into the cavity to the maximum extent allowed, each cartridge port is in sealed liquid communication with a respective one of the receiving part ports. Seals provided by cartridge sealing rings isolate the flows of liquid through the cartridge ports from each other and from the interior of the cavity. The receiving part is journalled for movement between the first and second positions by way of guide protrusions and guides defined on the inside of the housing of the head part.

WO 2016/110321 A1 discloses liquid treatment cartridges that include a housing including a vessel in the form of a beaker-shaped housing part. An open end of the beaker-shaped housing part is closed by and irreversibly joined to a cap-shaped housing part. The cap-shaped housing part comprises a body obtainable by moulding, e.g. injection-moulding, and will generally be made of plastic. The body includes a connecting head for insertion into a cavity of a head part of a liquid treatment system. Formed in the head part are first to fourth channels, each with a respective port at an end thereof and each with an interior end section. A receiving part into which the connecting head is arranged to be inserted is journalled for rotation about a spindle with respect to a housing of the head part.

Many liquid treatment systems allow for a linear sliding motion to insert the cartridge head section into the receiving head part of the liquid treatment system. In order to provide for a positive locking of the cartridge head section within the head part, the cartridge head section usually comprises at least one protruding locking part that is moved into a positive locking engagement with the head part of the liquid treatment system by rotating or swiveling the cartridge head section after sliding in the cartridge head section into the head part.

However, if the cartridge head section is not fully inserted into the head part before applying the rotating or swiveling force to the cartridge, sometimes and unintentionally the protruding locking parts are damaged or broken off of the cartridge head section. Without fully operational protruding locking parts the cartridge head section cannot be moved into the positive locking engagement with the head part and the liquid treatment cartridge cannot be safely used with the liquid treatment system. In most cases such a cartridge is of no use anymore, even though the cartridge still stores a full amount of filtering media or additives for the intended liquid treatment. Usually, such a damaged cartridge must be disposed of, which in some cases requires additional efforts and costs for optional or mandatory recovery and recycling of the filtering media or additives.

Thus, it is an object of the invention to provide for a liquid treatment cartridge of the type mentioned above that allows for easy insertion of the cartridge head section into the head part of the liquid treatment system with a reduced risk to damage the cartridge in a manner that prevents subsequent use of the cartridge.

### Summary of the invention

This object is achieved according to a first aspect of the invention by a system as defined in claim 1. It is considered a main advantage of this invention to make use of the cap as basis and support element for the protruding locking part or parts that are required for the positive locking of the cartridge head section within the head part of the liquid treatment system. The cap remains on the cartridge head section during insertion into the head part of the liquid treatment system as well as during the subsequent use of the cartridge for the liquid treatment. The liquid inlet port and the liquid outlet port are freely accessible through the at least one port opening, which allows for an easy and reliable fluid-tight connection of the liquid inlet port and the liquid outlet port with corresponding ports in the head part of the liquid treatment system.

In case that the protruding locking parts are damaged or broken off during an improperly performed insertion procedure of the cartridge head section into the head part of the liquid treatment section, the damage is limited to the cap, and the cartridge itself is not damaged. After a replacement of the damaged cap, the cartridge can still be put to the intended use.

The cap can be releasably attached at or onto the cartridge head section. Thus, the replacement of the cap can be performed either at the point of use by untrained individuals, or after returning the cartridge with the damaged cap to the manufacturer or a point of service. However, it is also possible to attach the cap at or onto the cartridge head section in a manner that does not allow for a detachment without further damaging the cap or the cartridge which might be required for protection of the cartridge head section or for avoiding any tampering of the liquid treatment cartridge.

According to an embodiment of the invention, the at least one protruding locking part comprises an elongated protrusion extending along an insertion direction of the cartridge head section into the head part of the liquid treatment system. Such an elongated protrusion that extends along the direction of the intended insertion of the cartridge head section into the head part can be useful for guidance of the cartridge head section during the sliding movement into the head part. Depending on the shape of the protrusion, such an elongated protrusion can cause or provide for an advantageous forced guidance for an easy and reliable insertion of the cartridge head section into the head part.

According to an advantageous aspect of the invention, the cap comprises two or more protruding locking parts which are arranged at a distance from each other along a circumference of the cartridge head section. By arranging two or more, e.g. three or four protruding locking parts along a circumference at the cap, the mechanical load of each individual protruding locking part is reduced during an insertion movement of the cartridge head section into the head part. The two or more protruding locking parts can be arranged symmetrical and with an equal distance towards each other along the circumference of the cap. It is also possible to arrange the two or more protruding locking parts at irregular intervals in the circumferential direction. The position of the two or more protruding locking parts can be adapted to meet e.g. functional requirements or space requirements. It is also possible to provide for a specific orientation of the cartridge and to avoid incorrect insertion of the cartridge into the head part.

According to an embodiment of the invention, the cap comprises a first side wall and a second side wall, which are connected by an elastic swivel joint, whereby the at least one protruding locking part is arranged at the first or second side wall, and whereby an opening between the first and second side wall provides for the at least one port opening. The swivel joint enables a deformation of the cap that allows for mounting the cap onto the cartridge head section e.g. during manufacture of the liquid treatment cartridge. The swivel joint also allows for a deformation of the cap under excessive mechanical stress e.g. during an improper insertion movement, resulting in an advantageous detachment of the cap from the cartridge head section before the excessive mechanical stress may cause any damage to the cartridge head section. For most applications the elastic swivel joint can be arranged at a front end of the cartridge head section, running transverse to a longitudinal axis of the liquid treatment cartridge, whereby the longitudinal axis runs from one front end to the other and opposing front end. The first and second side wall are arranged along a circumference of the cap and extend from the elastic swivel joint towards a central area of the liquid treatment cartridge.

The opening between the first and second side wall may extend along an insertion direction of the cartridge head section into the head part of the liquid treatment system. In case that the cartridge head section comprises one liquid inlet port and one liquid outlet port facing the same direction, a single opening between the first and second side wall that is in alignment with the two ports may be sufficient to provide for a port opening that allows free access to the two ports of the cartridge head section of the liquid treatment cartridge. If e.g. the two ports are facing opposite directions, the cap comprises two corresponding port openings whereby each of the port openings is arranged at opposite directions between the first and second side wall and each of the port openings within the cap allow for access to the corresponding port. If the cartridge head section comprises more than two ports, the port openings within the cap are adapted accordingly to match the ports and to allow for easy access to all ports during after inserting the liquid treatment cartridge with the cap into the head part of the liquid treatment system.

According to an advantageous aspect of the invention the cap and the cartridge head section comprise fastening means for detachably fastening the cap onto the cartridge head section. The fastening means may comprise e.g. a screw thread or a bayonet joint.

In yet another embodiment, the fastening means comprise at least one locking tongue and at least one recess adapted to the locking tongue, so that the locking tongue can engage behind an edge of the recess. For many applications it is considered advantageous that the cartridge head section comprises one or two locking tongues protruding laterally outwards from the cartridge head section, and that the cap comprises one recess or two recesses that are adapted to receive the corresponding locking tongue and to provide for a positive locking of the locking tongue at or within the recess. For attaching the cap onto the cartridge head section, the cap can be snapped on or pressed onto the cartridge head section. In case of excessive mechanical stress, the cap can be removed from the one or two locking tongues without damaging the cap or the cartridge head section of the liquid treatment cartridge.

According to an aspect of the invention, the fastening means are adapted to require a detachment force for detaching the cap from the cartridge head section that is less than a destructive force that results in a destruction of the at least one protruding locking part. The design of the locking tongues and the corresponding recesses can be adapted to provide for a retention force that is high enough to allow for any handling during storage and transport of the liquid treatment cartridge as well as for insertion of the cartridge head section into the head part of the liquid treatment system, but sufficiently lower than a destruction force that might damage the cartridge head section during improper insertion of the cartridge head section into the head part of the liquid treatment system. The shape of the cap can be adapted to facilitate and ensure a non-destructive detachment of the cap from the cartridge head section. In an embodiment of the invention the shape and design of the cap can comprise the first side wall and the second side wall as described above, which are connected by the elastic swivel joint. The retention force, which holds the cap on the cartridge head section, can be preset by the locking tongue engagement and by the resistance of the elastic joint against deformation of the cap.

For many applications a casing of the liquid treatment cartridge must be made of a material that must meet many requirements related e.g. to the safety of use of the cartridge, resulting in high costs for obtaining the material and manufacturing the casing of the cartridge from this material. In case that the liquid treatment system is used for treatment of drinking water or any other liquids intended for human consumption, the material must also be food safe and abrasive-resistant. However, the cap has no direct contact with the liquid that flows through the liquid treatment cartridge. Thus, according to an aspect of the invention, the cap is made from a cap material that is different to the material of the cartridge head section. The cap material need not be e.g. food safe or of excellent abrasion resistance. For manufacturing the cap, a much cheaper material can be used that may also facilitate the manufacturing process of the cap.

Furthermore, the material of the cap can be provided with different colors, and the color of the cap can be indicative of the content of the liquid treatment cartridge, i.e. of the nature of the treatment that can be performed with the respective cartridge. Thus, without any additional effort or costs, information of the type of the liquid treatment cartridge can be provided by color-coding the cap that is made from a different material than the casing of the cartridge.

For safety reasons and in order to avoid any unwanted staining or contamination of the liquid inlet port or liquid outlet port of the cartridge head section, the cap may comprise a cover for the at least one port opening. The cover can be made in one piece with the cap and can be connected to the remainder of the cap by tear lines or break zones, providing for a frangible connection that allows for an easy separation and removal of the cover from the cap before inserting the cartridge head section with the cap into the head part of the liquid treatment system.

According to an embodiment of the invention the cap comprises means for releasably fastening a protective cover that covers the at least one liquid inlet port and the at least one liquid outlet port within the cartridge head section. A separate protective cover allows for a cost-effective manufacture of the protective cover and can be made of a material that is different from the cap material and from the material of the cartridge casing. The protective cover can be releasably attached to the cap which facilitates the non-destructive removal of the protective cover from the cap before the use of the cartridge.

In yet another embodiment the cap comprises means for attaching an indicator element that indicates the type of the liquid treatment that can be performed with the liquid treatment cartridge. Apart from indicating the type of cartridge by e.g. adhesive labels or color coding of the cap, it is possible to make use of an indicator element that indicates the type of the cartridge and the respective liquid treatment that can be performed with this cartridge. The indicator element can be made of yet another material or at least of a different color than the cap. Different indicator elements may be of different colors, shapes or alignment with respect to the cap in order to provide information about the type of the cartridge.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic sectional view of a head part of a liquid treatment system with a cartridge head section and a cap of a liquid treatment cartridge inserted into the head part,
Figure 2 illustrates a schematic view of the cartridge head section and the cap before the insertion movement that is indicated in Figure 2,
Figure 3 illustrates a top view onto a front end of a liquid treatment cartridge with a cap attached to a cartridge head section of the liquid treatment cartridge,
Figure 4 illustrates a side view of the cartridge head section with the cap as shown in Figure 3,
Figure 5 illustrates a sectional view of the cartridge head section with the cap along a section line III-III shown in Figure 3,
Figure 6 illustrates another sectional view along a section line IV-IV shown in Figure 3,
Figure 7 illustrates a side view of the cartridge head section and the cap in an exploded view,
Figure 8 illustrates a perspective view of the cartridge head section and the cap in an exploded view,
Figure 9 illustrates a perspective view similar to Figure 8 of another embodiment of the cartridge head section and the cap with an indicator element,
Figure 10 illustrates a side view of the cartridge head section and the cap shown in Figure 9, and
Figure 11 illustrates a side view of the cartridge head section as shown in Figure 4 together with a protective cover mounted onto the cartridge head section with the cap.

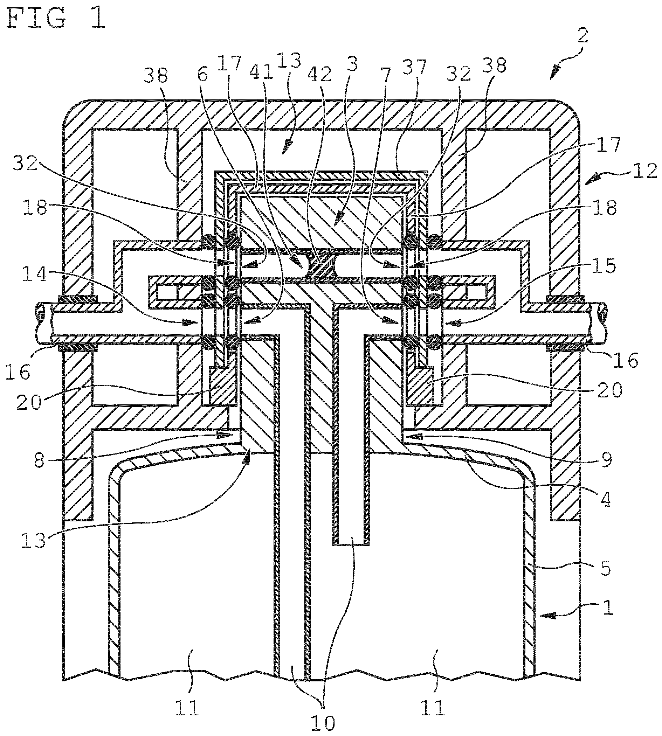

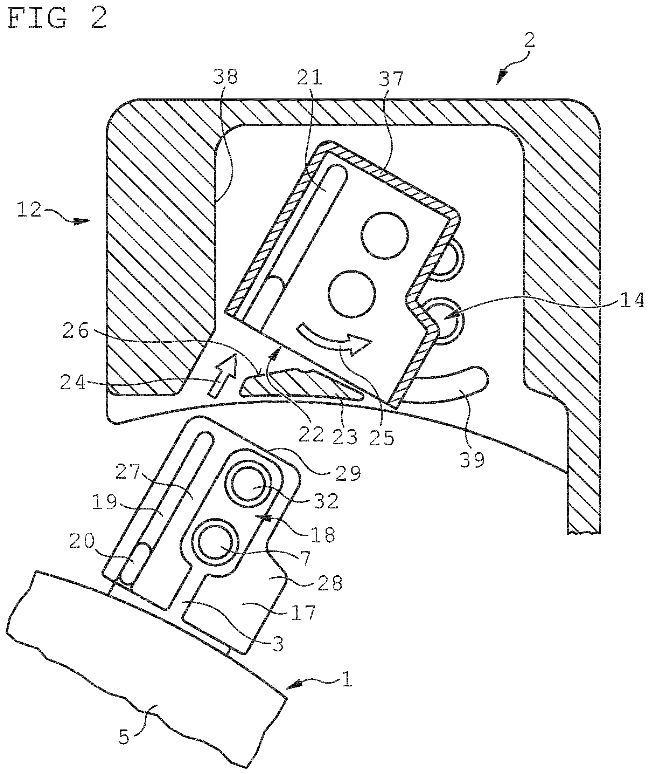

Figures 1 and 2 illustrate a sectional view through a liquid treatment cartridge 1 and a liquid treatment system 2 that receives the liquid treatment cartridge 1 for performing the desired treatment of the liquid. In Figure 1, the liquid treatment cartridge 1 is fully received inside the liquid treatment system 2 and shown in an operating position. In Figure 2, the liquid treatment system 2 is shown in a loading or unloading status with the liquid treatment cartridge 1 close by, but not fully inserted into the liquid treatment system 2.

The liquid treatment cartridge 1 comprises a cartridge head section 3 that protrudes in a longitudinal direction from a closing lid 4 of a casing 5 of the liquid treatment cartridge 1. The cartridge head section 3 comprises a liquid inlet port 6 and a liquid outlet port 7 that are arranged at a first side 8 of the cartridge head section 3 and a second side 9 opposing the first side 8. The liquid inlet port 6 and the liquid outlet port 7 are connected via fluid ducts 10 with a treatment section 11 inside of the casing 5 of the liquid treatment cartridge 1. Within the treatment section 11 an amount of a filter medium or of additives are stored for the intended treatment of a fluid that flows through the treatment section 11.

The liquid treatment system 2 comprises a head part 12 with a cartridge recess 13 that is adapted for receiving the cartridge head section 3 of the liquid treatment cartridge 1. The head part 12 comprises an outlet port 14 and an inlet port 15, whereby both ports 14 and 15 are connected to flexible liquid hoses 16 of the liquid treatment system 2. After inserting the cartridge head section 3 into the cartridge recess 13 of the head part 12, the outlet port 14 of the head part 12 is in a fluid-tight connection with the liquid inlet port 6 of the cartridge head section 3. Furthermore, the inlet port 15 of the head part 12 is in a fluid-tight connection with the liquid outlet port 7 of the cartridge head section 3. Thus, in the operating position the liquid inlet port 6 of the cartridge head section 3 is connected with the outlet port 14 of the head part 12 and the liquid outlet port 7 of the cartridge head section 3 is connected with the inlet port 15 of the head part 12, which enables a stream of liquid to flow from the outlet port 14 of the head part 12 through the liquid inlet port 4, through the treatment section 11 within the liquid treatment cartridge 1, and through the liquid outlet port 7 of the cartridge head section 3 into the inlet port 15 back into the head part 12 of the liquid treatment system 2.

Optionally, there is a bypass fluid duct 41 above the liquid inlet port 6 and the liquid outlet port 7. A valve 42 that is arranged within the bypass fluid duct 41 allows for a variable amount of fluid that only flows through the bypass fluid duct 41 without being treated within the treatment section 11 of the liquid treatment cartridge 1. The valve 42 can be operated via an actuating element 35 that is not shown in Figure 1, but explained below.

The cartridge head section 3 is encased by a cap 17 that is releasably attached to the cartridge head section 3. The cap 17 has two port openings 18, one at each side facing laterally outwards. The shape and position of the port openings 18 are adapted to provide free access to the liquid inlet port 6 and to the liquid outlet port 7 of the cartridge head section 3 that is covered by the cap 17. Thus, the cap 17 that encases a large part of the cartridge head section 3 need not be removed before inserting the cartridge head section 3 with the cap 17 into the head part 12 of the liquid treatment system 2.

The head part 12 of the liquid treatment system 2 comprises a cartridge connector 37 that is pivotably mounted in a casing 38 of the head part 12. The cartridge connector 37 and provides for a forced guidance of the cartridge head section 3 during a loading or unloading movement of the liquid treatment cartridge 1 into or from the liquid treatment system 2. The pivotable cartridge connector 37 facilitates and supports the loading or unloading operation of the liquid treatment cartridge 1.

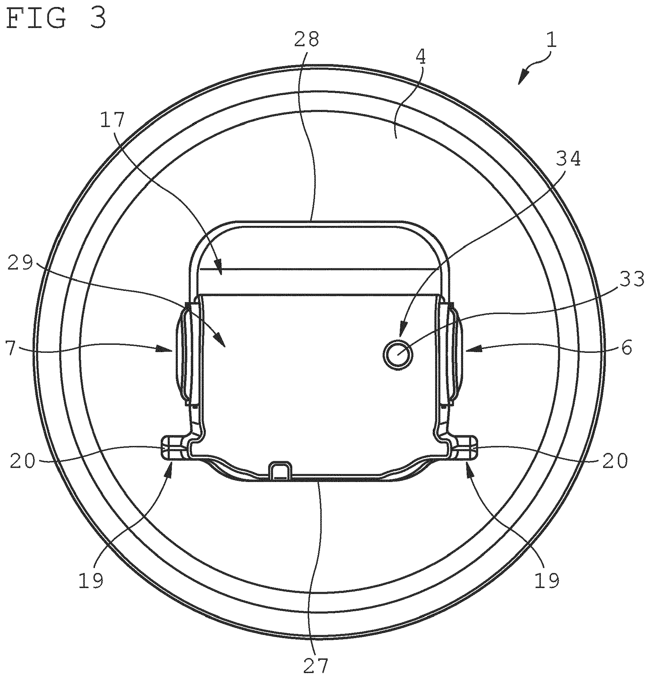

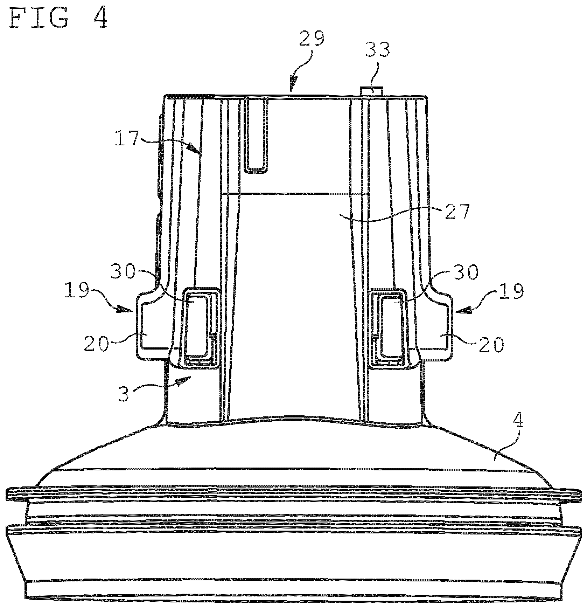

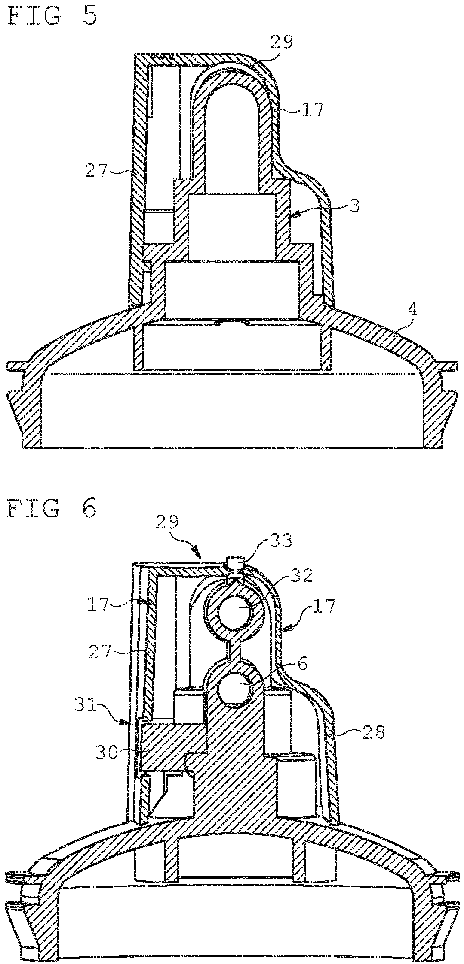

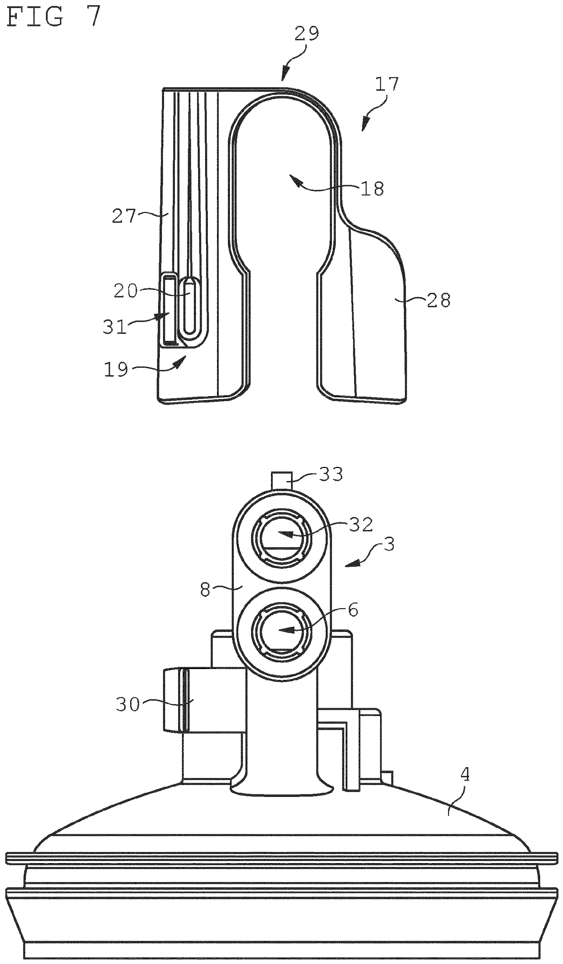

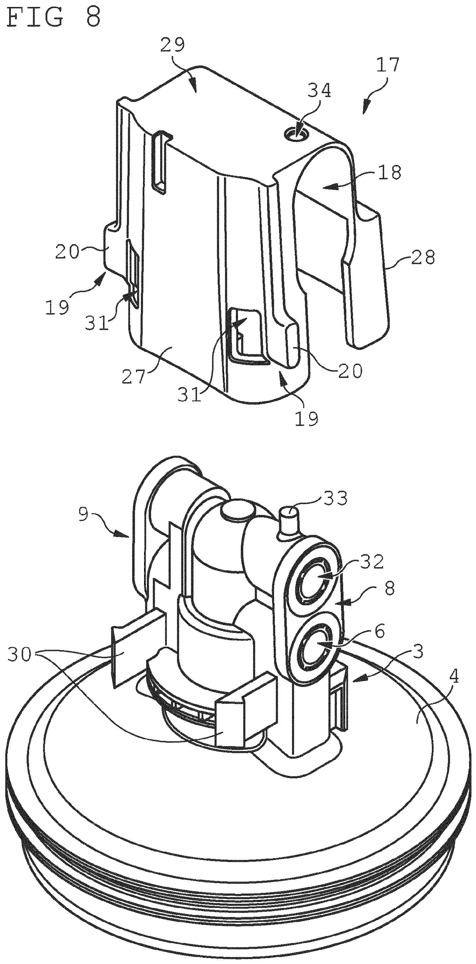

Figures 3 to 8 illustrate different views of an exemplary embodiment of the cartridge head section 3 of the liquid treatment cartridge 1, whereby only the closing lid 4 of the casing 5 of the liquid treatment cartridge 1 is shown in these Figures. Further aspects and elements of the cap 17 and the cartridge head section 3 are shown in more detail in Figures 3 to 8.

In the operating position the cartridge head section 3 with the cap 17 attached thereto is locked within the head part 12 of the liquid treatment system 2 in order to avoid an unintentional removal of the cartridge head section 3 and thus the liquid treatment cartridge 1 from the head part 12.

In order to achieve a positive locking of the liquid treatment cartridge 1 within the head part 12, the cap 17 comprises two locking parts 19 that are arranged at a distance towards each other along a circumference of the cap 17. Each locking part 19 comprises an elongated protrusion 20 that extends along a longitudinal direction that equals the direction of an initial insertion movement of the cartridge head section 3 into the cartridge recess 13 of the head part 12. For each locking part 19 of the cap 17, the cartridge connector 37 comprises a guidance groove 21 that runs from a recess opening 22 of the cartridge connector 37 next to the cartridge recess 13 of the head part 12 along a straight line up to a top side of the cartridge connector 37. A form lock element 23 is formed on the head part 12 and arranged in a center area of the cartridge recess 13. The guidance groove 21 of the pivotable cartridge connector 37 and the form lock element 23 are designed and adapted to accommodate the elongated protrusion 20 of the corresponding locking part 19 of the cap 17 in a positively fixed operating position after the liquid treatment cartridge 1 with the cap 17 has been fully inserted into the cartridge connector 37 and after the cartridge connector 37 has been pivoted into the operating position. The pivoting movement of the cartridge connector 37 is supported by a cam surface 39 formed in the casing 38 of the head part 12 and by a cam formed on the cartridge connector 37 that is not shown in Figure 2.

The guidance groove 21 provides for a forced guidance of the cap 17 and the cartridge head section 3 during an initial sliding movement of the cartridge head section 3 into the cartridge connector 37 of the head part 12. The initial sliding movement is depicted with an arrow 24 in Figure 2. After the cap 17 with the locking parts 19 is fully inserted into the cartridge connector 37 of the head part 12, the liquid treatment cartridge 1 must be pivoted into the operation position, which shifts the elongated protrusions 20 from the corresponding guidance grooves 21 on top of the respective form lock elements 23. The pivotal movement is depicted with an arrow 25 in Figure 2. The positive engagement of the elongated protrusions 20 with top surface 26 of the form lock element 23 prevents the liquid treatment cartridge 1 from falling out of the head part 12 or from unintentional removal of the liquid treatment cartridge 1 by pulling at the liquid treatment cartridge 1 without a prior pivoting movement that shifts the elongated protrusions 20 back into the guidance grooves 21.

Referring to Figures 3 to 8 and the embodiment shown in these Figures, the shape of the cap 17 is basically U-shaped, with a first side wall 27 and a second side wall 28 that are connected by an elastic swivel joint 29. The elastic swivel joint 29 runs transvers to the longitudinal axis of the liquid treatment cartridge 1 and the cap 17 and allows for a deforming swivel movement of the first side wall 27 away from the second side wall 28.

The cartridge head section 3 comprises two locking tongues 30 that are arranged at a distance towards each other along the circumference of the cartridge head section 3. Both locking tongues 30 protrude laterally outwards from the cartridge head section 3 in a direction that is transverse to the longitudinal direction and the direction of the initial sliding movement of the cartridge head section 3 into the head part 12. The cap 17 comprises two recesses 31 that are adapted to receive the corresponding locking tongue 30 and to provide for a positive locking of the respective locking tongue 30 at or within the recess 31. The cap 17 can be attached to the cartridge head section 3 by deforming the cap 17, by pushing the cap 17 onto the cartridge head section 3 until the recesses 31 are in alignment with the locking tongues 30, and by subsequently releasing the cap 17 which results in snapping on the cap 17 onto the locking tongues 30 and thus onto the cartridge head section 3. The cap 17 can be removed from the cartridge head section 3 by performing these steps backwards.

In case that the initial sliding movement is not fully completed before a lateral force is applied for the swivel movement, such a lateral force might result in damaging any locking parts that protrude from the cartridge head section 3 or that are rigidly attached to the cartridge head section 3. However, by arranging the locking parts 19 at the cap 17 that is releasably attached to the cartridge head section 3, any damaging of the cartridge head section 3 can be avoided even if excessive mechanical stress is applied to the cartridge head section 3 during an insertion movement of the cartridge head section 3 into the head part 12. If such a lateral force is applied too early to the liquid treatment cartridge 1 and the locking parts 19 are still trapped within the guidance grooves 21, the cap 17 will be deformed by pivoting the first side wall 27 with the locking parts 19 away from the second side wall 28, thereby detaching and removing the locking tongues 30 from the corresponding recesses 31. Due to the elastic swivel joint 29 this will also not cause a permanent damage to the cap 17.

The cap 17 is made of a material that is different from the material of the cartridge head section 3. Different caps 17 can be of different colors, thus enabling a color coding of different liquid treatment cartridges 1.

In Figures 3 to 8, there is an additional port 32 above each of the liquid inlet port 6 and the liquid outlet port 7 of the cartridge head section 3. The additional ports 32 can be connected to the corresponding liquid inlet port 6 and the liquid outlet port 7 in order to increase the throughput of the liquid treatment cartridge 1. It is also possible to make use of these additional ports 32 to create a bypass for some amount of liquid that will not be treated within the treatment section 11 of the liquid treatment cartridge 1. However, as such options are not part of this invention, these are only schematically indicated in Figure 1.

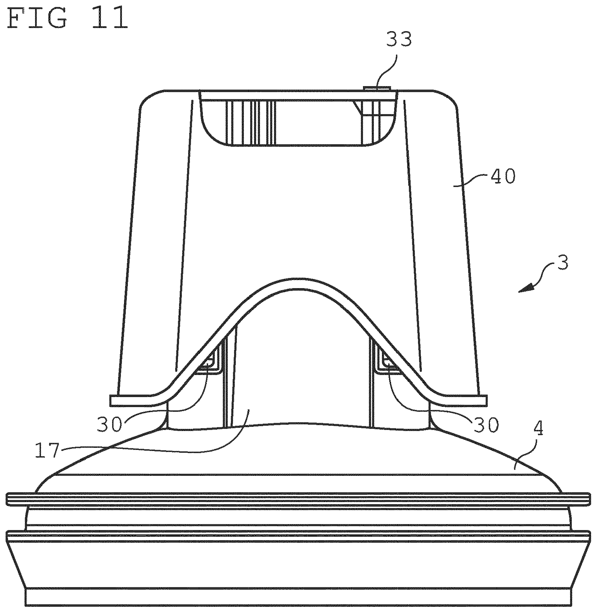

On top of the cartridge head section 3 there is a pin 33 that protrudes from the cartridge head section 3 in the longitudinal direction. The pin 33 traverses the cap 17 through a corresponding pin opening 34 in the elastic swivel joint 29 of the cap 17. The pin 33 can be used to attach a protective cover 40 shown in Figure 11 or an indicator element to the cartridge head section 3. It is also possible to attach a protective cover or an indicator element to the cap 17.

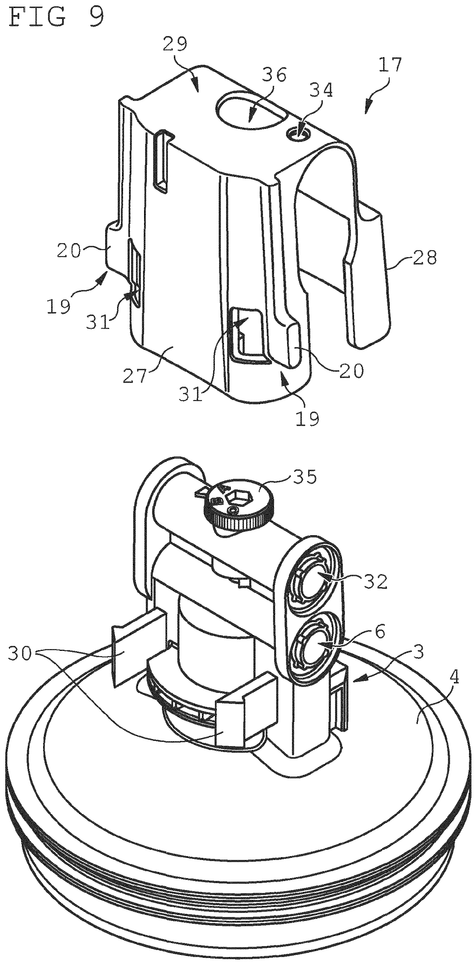

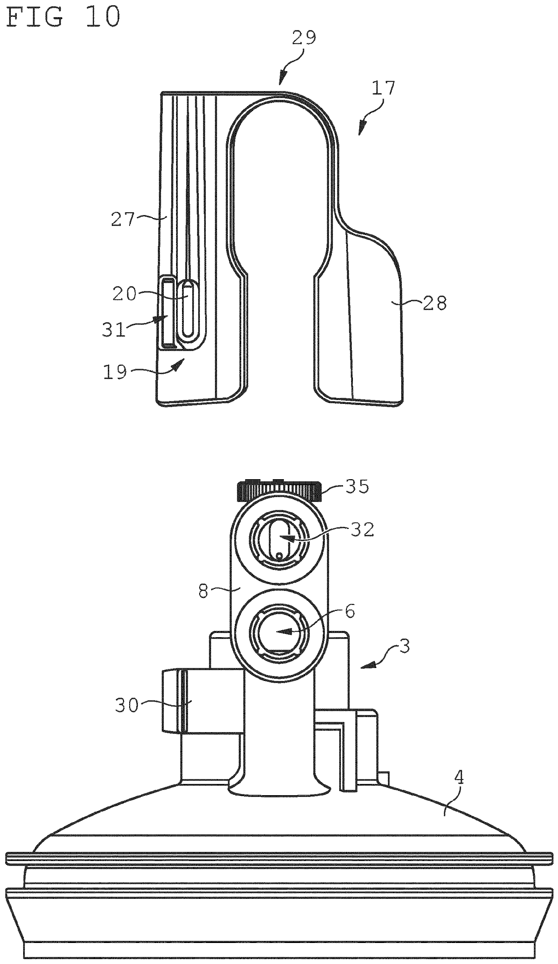

Figures 9 and 10 illustrate a different embodiment of the cartridge head section 3 and the corresponding cap 17 attached thereto. An actuating element 35 for selecting and enabling different operation modes of the additional ports 32 is arranged at an end face of the cartridge head section 3. The actuating element 35 extends through a corresponding opening 36 in the cap 17 and can be actuated without removing the cap 17 from the cartridge head section 3. The actuating element 35 can be e.g. a part of a valve that connects the additional ports 32 to provide for a bypass conduit.

Figure 11 illustrates the cartridge head section 3 of the liquid treatment cartridge 1 and a protective cover 40 that is mounted on top of the cartridge head section 3 and the cap 17. The protective cover 40 is connected to the cap 17 via the pin 33. The protective cover 40 is separately made of a different material and ultrasonically welded to the cap 17 via the pin 33. The protective cover 40 covers the liquid inlet port 6, the liquid outlet port 7 and all additional ports 32 and prevents unwanted pollution or contamination of the ports 6, 7, 32 and the liquid treatment cartridge 1 during storage and transport. The protective cover 40 must be removed before inserting the liquid treatment cartridge 1 into the head part 12 of the liquid treatment system 2 by pulling the protective cover 40 from the cap 17 and tearing off the protective cover 40 from the pin 33.

## Claims

1. System comprising a liquid treatment cartridge (1) and a cap (17) for placement on a cartridge head section (3) of the liquid treatment cartridge (1),
wherein the cartridge head section (3) includes at least one liquid inlet port (6) and at least one liquid outlet port (7), and
wherein the cartridge head section (3) is configured for insertion into a head part (12) of a liquid treatment system (2) whilst the cap remains on the cartridge head section (3), to establish a liquid-tight connection between both the at least one liquid inlet port (6) and the at least one liquid outlet port (7) of the liquid treatment cartridge (1) and corresponding outlet and inlet ports (14,15) of the head part (12) of the liquid treatment system (2) that enables a stream of liquid to flow from the outlet port (14) of the head part (12) through the liquid inlet port (6) of the cartridge head section (3) into the liquid treatment cartridge (1) and after a treatment of the liquid within the liquid treatment cartridge (1) from the liquid outlet port (7) of the cartridge head section (3) into the inlet port (15) of the head part (12) of the liquid treatment system (2),
wherein the cap (17) comprises at least one port opening (18) that allows for establishing the liquid-tight connection with the at least one liquid inlet port (6) and the at least one liquid outlet port (7) of the cartridge head section (3) without removing the cap (17) from the cartridge head section (3), and
wherein the cap (17) comprises at least one protruding locking part (19) for releasably locking the cartridge head section (3) within the head part (12) of the liquid treatment system (2).

2. System according to claim 1, wherein the at least one protruding locking part (19) comprises an elongated protrusion (20) extending along an insertion direction of the cartridge head section (3) into the head part (12) of the liquid treatment system (2).

3. System according to claim 1 or claim 2, wherein the cap (17) comprises two or more protruding locking parts (19) which are arranged at a distance from each other along a circumference of the cartridge head section (3).

4. System according to one of the preceding claims, wherein the cap (17) comprises a first side wall (27) and a second side wall (28), which are connected by an elastic swivel joint (29), whereby the at least one protruding locking part (19) is arranged at the first or second side wall (27,28), and whereby an opening between the first and second side wall (27,28) provides for the at least one port opening (18).

5. System according to one of the preceding claims, wherein the cap (17) and the cartridge head section (3) comprise fastening means for detachably fastening the cap (17) onto the cartridge head section (3).

6. System according to claim 5, wherein the fastening means comprise at least one locking tongue (30) and at least one recess (31) adapted to the locking tongue (30), so that the locking tongue (30) can engage behind an edge of the recess (31).

7. System according to claim 5 or 6, wherein the fastening means are adapted to require a detachment force for detaching the cap (17) from the cartridge head section (3) that is less than a destructive force that results in a destruction of the at least one protruding locking part (19).

8. System according to one of the preceding claims, wherein the cap (17) is made from a cap material that is different to the material of the cartridge head section (3).

9. System according to one of the preceding claims, wherein the cap (17) comprises means for releasably fastening a protective cover that covers the at least one liquid inlet port (6) and the at least one liquid outlet port (7) within the cartridge head section (3).

10. System according to one of the preceding claims, wherein the cap (17) comprises means for attaching an indicator element that indicates the type of the liquid treatment that can be performed with the liquid treatment cartridge (1).

## Patentansprüche

1. System umfassend eine Flüssigkeitsaufbereitungskartusche (1) und eine Kappe (17) zum Aufsetzen auf einen Kartuschenkopfabschnitt (3) der Flüssigkeitsaufbereitungskartusche (1),
wobei der Kartuschenkopfabschnitt (3) mindestens einen Flüssigkeitseinlassanschluss (6) und mindestens einen Flüssigkeitauslassanschluss (7) beinhaltet, und
wobei der Kartuschenkopfabschnitt (3) zum Einsetzen in ein Kopfteil (12) eines Flüssigkeitsaufbereitungssystems (2) konfiguriert ist, während die Kappe auf dem Kartuschenkopfabschnitt (3) verbleibt, um eine flüssigkeitsdichte Verbindung zwischen sowohl dem mindestens einen Flüssigkeitseinlassanschluss (6) als auch dem mindestens einen Flüssigkeitauslassanschluss (7) der Flüssigkeitsaufbereitungskartusche (1) und entsprechenden Auslass- und Einlassöffnungen (14, 15) des Kopfteils (12) des Flüssigkeitsaufbereitungssystems (2) herzustellen, die es einem Flüssigkeitsstrom ermöglicht, von der Auslassöffnung (14) des Kopfteils (12) durch den Flüssigkeitseinlassanschluss (6) des Kartuschenkopfabschnitts (3) in die Flüssigkeitsaufbereitungskartusche (1) und nach einer Aufbereitung der Flüssigkeit innerhalb der Flüssigkeitsaufbereitungskartusche (1) von dem Flüssigkeitauslassanschluss (7) des Kartuschenkopfabschnitts (3) in die Einlassöffnung (15) des Kopfteils (12) des Flüssigkeitsaufbereitungssystems (2) zu fließen,
wobei die Kappe (17) mindestens eine Anschlussöffnung (18) umfasst, die es ermöglicht, die flüssigkeitsdichte Verbindung mit dem mindestens einen Flüssigkeitseinlassanschluss (6) und dem mindestens einen Flüssigkeitsauslassanschluss (7) des Kartuschenkopfabschnitts (3) herzustellen, ohne die Kappe (17) von dem Kartuschenkopfabschnitt (3) zu entfernen, und
wobei die Kappe (17) mindestens ein hervorstehendes Verriegelungsteil (19) zum lösbaren Verriegeln des Kartuschenkopfabschnitts (3) innerhalb des Kopfteils (12) des Flüssigkeitsaufbereitungssystems (2) umfasst.

2. System nach Anspruch 1, wobei das mindestens eine hervorstehende Verriegelungsteil (19) einen länglichen Vorsprung (20) umfasst, der sich entlang einer Einsteckrichtung des Kartuschenkopfabschnitts (3) in das Kopfteil (12) des Flüssigkeitsaufbereitungssystems (2) erstreckt.

3. System nach Anspruch 1 oder Anspruch 2, wobei die Kappe (17) zwei oder mehr hervorstehende Verriegelungsteile (19) umfasst, die in einem Abstand voneinander entlang eines Umfangs des Kartuschenkopfabschnitts (3) angeordnet sind.

4. System nach einem der vorstehenden Ansprüche, wobei die Kappe (17) eine erste Seitenwand (27) und eine zweite Seitenwand (28) umfasst, die durch ein elastisches Drehgelenk (29) verbunden sind, wobei das mindestens eine hervorstehende Verriegelungsteil (19) an der ersten oder zweiten Seitenwand (27, 28) angeordnet ist, und wobei eine Öffnung zwischen der ersten und zweiten Seitenwand (27, 28) die mindestens eine Anschlussöffnung (18) bereitstellt.

5. System nach einem der vorstehenden Ansprüche, wobei die Kappe (17) und der Kartuschenkopfabschnitt (3) Befestigungsmittel zum lösbaren Befestigen der Kappe (17) auf dem Kartuschenkopfabschnitt (3) umfassen.

6. System nach Anspruch 5, wobei die Befestigungsmittel mindestens eine Rastzunge (30) und mindestens eine an die Rastzunge (30) angepasste Aussparung (31) umfassen, so dass die Rastzunge (30) hinter einen Rand der Aussparung (31) greifen kann.

7. System nach Anspruch 5 oder 6, wobei die Befestigungsmittel so ausgebildet sind, dass zum Ablösen der Kappe (17) vom Kartuschenkopfabschnitt (3) eine Ablösekraft erforderlich ist, die geringer ist als eine Zerstörungskraft, die zu einer Zerstörung des mindestens einen hervorstehenden Verriegelungsteils (19) führt.

8. System nach einem der vorstehenden Ansprüche, wobei die Kappe (17) aus einem Kappenmaterial hergestellt ist, das sich vom Material des Kartuschenkopfabschnitts (3) unterscheidet.

9. System nach einem der vorstehenden Ansprüche, wobei die Kappe (17) Mittel zum lösbaren Befestigen einer Schutzabdeckung umfasst, die den mindestens einen Flüssigkeitseinlassanschluss (6) und den mindestens einen Flüssigkeitauslassanschluss (7) innerhalb des Kartuschenkopfabschnitts (3) abdeckt.

10. System nach einem der vorstehenden Ansprüche, wobei die Kappe (17) Mittel zum Anbringen eines Anzeigeelements umfasst, das die Art der Flüssigkeitsaufbereitung anzeigt, die mit der Flüssigkeitsaufbereitungskartusche (1) durchgeführt werden kann.

## Revendications

1. Système comprenant une cartouche de traitement de liquide (1) et un capuchon (17) destiné à être placé sur une section de tête (3) de cartouche de la cartouche de traitement de liquide (1),
dans lequel la section de tête (3) de cartouche inclut au moins un orifice d'entrée de liquide (6) et au moins un orifice de sortie de liquide (7), et
dans lequel la section de tête (3) de cartouche est configurée pour être insérée dans une partie de tête (12) d'un système de traitement de liquide (2) en même temps que le capuchon reste sur la section de tête (3) de cartouche, pour établir une liaison étanche aux liquides entre à la fois le au moins un orifice d'entrée de liquide (6) et le au moins un orifice de sortie de liquide (7) de la cartouche de traitement de liquide (1) et des orifices de sortie et d'entrée correspondants (14, 15) de la partie de tête (12) du système de traitement de liquide (2) qui permet à un flux de liquide de s'écouler depuis l'orifice de sortie (14) de la partie de tête (12) à travers l'orifice d'entrée de liquide (6) de la section de tête (3) de cartouche jusque dans la cartouche de traitement de liquide (1) et après un traitement du liquide à l'intérieur de la cartouche de traitement de liquide (1) depuis l'orifice de sortie de liquide (7) de la section de tête (3) de cartouche jusque dans l'orifice d'entrée (15) de la partie de tête (12) du système de traitement de liquide (2),
dans lequel le capuchon (17) comprend au moins une ouverture (18) d'orifice qui permet d'établir la liaison étanche aux liquides avec le au moins un orifice d'entrée de liquide (6) et le au moins un orifice de sortie de liquide (7) de la section de tête (3) de cartouche sans retirer le capuchon (17) de la section de tête (3) de cartouche, et
dans lequel le capuchon (17) comprend au moins une partie de verrouillage saillante (19) pour verrouiller de manière libérable la section de tête (3) de cartouche à l'intérieur de la partie de tête (12) du système de traitement de liquide (2).

2. Système selon la revendication 1, dans lequel la au moins une partie de verrouillage saillante (19) comprend une saillie allongée (20) s'étendant le long d'une direction d'insertion de la section de tête (3) de cartouche dans la partie de tête (12) du système de traitement de liquide (2).

3. Système selon la revendication 1 ou la revendication 2, dans lequel le capuchon (17) comprend deux parties de verrouillage saillantes (19) ou plus qui sont agencées à distance les unes des autres le long d'une circonférence de la section de tête (3) de cartouche.

4. Système selon l'une des revendications précédentes, dans lequel le capuchon (17) comprend une première paroi latérale (27) et une seconde paroi latérale (28), qui sont reliées par un raccord articulé élastique (29), selon lequel la au moins une partie de verrouillage saillante (19) est agencée au niveau de la première ou de la seconde paroi latérale (27, 28), et selon lequel une ouverture entre les première et seconde parois latérales (27, 28) est fournie pour la au moins une ouverture (18) d'orifice.

5. Système selon l'une des revendications précédentes, dans lequel le capuchon (17) et la section de tête (3) de cartouche comprennent des moyens de fixation pour fixer de manière amovible le capuchon (17) sur la section de tête (3) de cartouche.

6. Système selon la revendication 5, dans lequel les moyens de fixation comprennent au moins une languette de verrouillage (30) et au moins un évidement (31) adapté à la languette de verrouillage (30), de sorte que la languette de verrouillage (30) puisse venir en prise derrière un bord de l'évidement (31).

7. Système selon la revendication 5 ou 6, dans lequel les moyens de fixation sont conçus pour nécessiter une force de détachement pour détacher le capuchon (17) de la section de tête (3) de cartouche qui est inférieure à une force destructrice qui entraîne une destruction de la au moins une partie de verrouillage saillante (19).

8. Système selon l'une des revendications précédentes, dans lequel le capuchon (17) est constitué d'un matériau de capuchon qui est différent du matériau de la section de tête (3) de cartouche.

9. Système selon l'une des revendications précédentes, dans lequel le capuchon (17) comprend des moyens pour fixer de manière libérable un couvercle de protection qui recouvre le au moins un orifice d'entrée de liquide (6) et le au moins un orifice de sortie de liquide (7) à l'intérieur de la section de tête (3) de cartouche.

10. Système selon l'une des revendications précédentes, dans lequel le capuchon (17) comprend des moyens pour fixer un élément indicateur qui indique le type du traitement de liquide qui peut être effectué avec la cartouche de traitement de liquide (1).
